Europäisches Patentamt

European Patent Office

Office européen des brevets

(11) Veröffentlichungsnummer: **0 395 576**
**A1**

## (12) EUROPÄISCHE PATENTANMELDUNG

(21) Anmeldenummer: 90810300.5

(22) Anmeldetag: 18.04.90

(51) Int. Cl.5: **B24B 5/16, G05B 19/18**

(30) Priorität: 28.04.89 CH 1643/89

(43) Veröffentlichungstag der Anmeldung:
**31.10.90 Patentblatt 90/44**

(84) Benannte Vertragsstaaten:
**AT BE CH DE ES FR GB IT LI NL SE**

(71) Anmelder: **MOSER, JEAN P.**
**SCHLEIFMASCHINEN**
**Haltenrebenstrasse 51**

**CH-8408 Winterthur(CH)**

(72) Erfinder: **Moser, Jean P.**
**Haltenrebenstrasse 51**
**CH-8408 Winterthur(CH)**

(74) Vertreter: **Breiter, Heinz**
**Patentanwalt H. Breiter AG**
**Schaffhauserstrasse 27 Postfach 1163**
**CH-8401 Winterthur(CH)**

(54) **Rundschleifmaschine mit schwenkbarem Werkstücktisch.**

(57) Die Rundschleifmaschine, insbesondere eine Walzenschleifmaschine, hat einen längsmittig schwenkbaren Werkstücktisch (14) und wenigstens ein erstes Antriebsorgan (12,12') zur während des Schleifens kontinuierlichen relativen Verschiebung eines rotationssymmetrischen Werkstücks (18) zu einer auf einem Schleifsupport (26) montierten Schleifscheibe (28) in Längsrichtung (Z).

Ein einends gelenkig am Werkstücktisch (14) angreifendes, vom ersten Antriebsorgan (12,12') unabhängiges zweites Antriebsorgan (20) mit Positionsgeber ist zur Erzeugung von gesteuerten, während des Schleifens kontinuierlichen Schwenkbewegungen (Y) programmiert.

Die Rundschleifmaschine eignet sich für alle rotationssymmetrischen Werkstücke, insbesondere zum Ballig- oder Hohlschleifen von Walzen.

EP 0 395 576 A1

FIG. 1

## Rundschleifmaschine mit schwenkbarem Werkstücktisch

Die Erfindung bezieht sich auf eine Rundschleifmaschine, insbesondere eine Walzenschleifmaschine mit einem längsmittig schwenkbaren Werkstücktisch und wenigstens einem ersten Antriebsorgan zur relativen Verschiebung eines rotationssymmetrischen Werkstücks zu einer auf einem Schleifsupport montierten Schleifscheibe in Längsrichtung. Weiter betrifft die Erfindung Verfahren zum Betrieb der Vorrichtung.

Die heute bekannten Rundschleifmaschinen, insbesondere Maschinen bzw. Einrichtungen zum Ballig- und Hohlschleifen von Walzen und ähnlichen Werkstücken, können grundsätzlich in zwei Gruppen eingeteilt werden:
- Maschinen, welche eine positive oder negative Wölbung durch Vor- und Zurückfahren der Schleifscheibe in radialer Richtung zur Längsachse des rotationssymmetrischen Werkstücks erzeugen.
- Maschinen, welche eine positive oder negative Wölbung durch Zustellen des Werkstücks zur Schleifscheibe erzeugen, wobei die Schleifscheibe in radialer Richtung nur zur Massänderung zugestellt wird und den Wölbungsvorgang nicht beeinflusst.

Die Rundschleifmaschinen der ersten Gruppe verfügen über eine spezielle Schleifscheiben-Zustellvorrichtung, welche durch starke Untersetzung eine sehr feine Zustellung ermöglicht. Die früher übliche, mechanische Synchronisation der Zustellung mit der Längsbewegung des Werkstücks wird heute vorwiegend durch elektronische Synchronisation und Steuerung ersetzt.

Ebenfalls der ersten Gruppe gehören CNC (Computer Numerical Control)-gesteuerte Rundschleifmaschinen an, welche die Schleifscheibe nach einem eingegebenen Programm direkt in radialer Richtung verstellen. Dieses Verfahren ist jedoch bei hohen Anforderungen an die Oberflächengüte sehr problematisch. Nach diesem System unvermeidliche Zustellstufen lassen sich nicht beliebig verkleinern oder gar vermeiden. Sie sind auf der Oberfläche des fertigen Werkstücks feststellbar.

Der zweiten Gruppe von Rundschleifmaschinen werden insbesondere auch Walzenschleifmaschinen, die mit einer entsprechenden Balligschleifeinrichtung ausgerüstet sind, zugeordnet. Die Balligschleifeinrichtung dieser Maschinen basiert auf einem längsmittig schwenkbaren Werkzeugtisch, der von einem am Maschinenbett befestigten, stufenlos einstellbaren Sinuslineal gesteuert wird. Derartigen Einrichtungen werden seit vielen Jahren im Handel angeboten.

Rundschleifmaschinen mit einem stufenlos einstellbaren Sinuslineal weisen u.a. den Nachteil auf, dass sie in der Praxis bezüglich ihrer Schleiflänge auf etwa 1200 bis 1500 mm begrenzt sind. Grössere Schleiflängen würden die genaue Erstellung sehr langer Sinuslineale erfordern, was nicht nur in untragbarem Masse aufwendig, sondern oft unmöglich ist. Die mechanische Bewegungsübertragung mittels eines Sinuslineals bleibt also auf kleinere Rundschleifmaschinen beschränkt.

Für die Seriefertigung von Werkstücken mit gerader Konusfläche ist aus der FR,A1, 2561561 eine Schleifmaschine bekannt. Die Seriefabrikation ist ohne zusätzliche Einheit für die Einstellung des Längenausgleichs möglich, es wird keine schiebende Spitze mehr gebraucht. Nach dem Einspannen eines Messstücks wird die Verschiebung einer Schwenkachse berechnet. Diese Schleifmaschine kann weder einen Fachmann zur Verbesserung eines Präzisionsschliffs zum Ballig- oder Hohlschleifen anregen noch ihm etwas nahelegen.

Der Erfinder hat sich die Aufgabe gestellt, eine Rundschleifmaschine der eingangs genannten Art zu schaffen, welche eine einwandfreie Oberflächengüte ohne Zustellstufen erlaubt, eine Schleiflänge von mehr als 1500 mm zulässt, äusserst feinfühlig verstellbar ist und dennoch wirtschaftliche Beschaffungs- und Betriebskosten erlaubt. Weiter sollen Verfahren zum Betrieb der Rundschleifmaschine geschaffen werden.

In bezug auf die Vorrichtung wird die Aufgabe erfindungsgemäss gelöst durch ein einends gelenkig am Werkstücktisch angreifendes, vom ersten Antriebsorgan unabhängiges zweites Antriebsorgan mit Positionsgeber zur Erzeugung von programmiert gesteuerten Schwenkbewegungen.

Mit der erfindungsgemässen Rundschleifmaschine erfolgt keine durch die maximale Länge eines Sinuslineals beschränkte mechanische Bewegungsübertragung mit starr an die Längsrichtung gekoppelter Schwenkbewegung. Bei modernen Walzwerken beispielsweise entspricht die Ballenlänge der Walzen immer der gesamten Schleiflänge.

Der Werkstücktisch und/oder der Schleifsupport kann/können in Längsrichtung des rotationssymmetrischen Werkstücks verschoben werden, wesentlich ist lediglich eine Relativverschiebung. In der industriellen Praxis wird jedoch bevorzugt entweder der Werkstücktisch oder der Schleifsupport verschoben.

Gleichzeitig mit der Bewegung in Längsrichtung bewirkt wenigstens ein zweites Antriebsorgan eine Schwenkbewegung des Werkstücktischs, die frei programmierbar ist. Es besteht nicht, wie bei Verwendung eines Sinuslineals, eine starre nur durch mechanisches Verstellen änderbare Abhängigkeit der Schwenkbewegung von der Längsbewegung.

Damit keine Verkantung der Schleifscheibe auf der Oberflä che des Werkstücks erfolgt, wird die Neigung der Rotationsachse stets so gesteuert, dass die Schleifscheibe dem Werkstück optimal anliegt.

Das erste Antriebsorgan zur Längsverschiebung des Werkstücktischs und/oder des Schleifsupports entspricht dem bekannten Stand der Technik, als Beispiel seien pneumatisch, hydraulisch oder elektrisch angetriebene Spindeln genannt.

Das erfindungsgemäss ausgebildete zweite Antriebsorgan ist vorzugsweise ein CNC (Computer Numerical Control )-gesteuerter Servomotor, beispielsweise ein elektrischer Asynchron-, ein elektrischer Schrittmotor, ein hydaulisch oder ein pneumatisch angetriebener Motor. Die Untersetzung Servomotor - Werkstücktischschwenkweg ist gross bis extrem gross. Dies gewährleistet die stufenlose Zustellung auch kleinster Beträge, bei stabilen dynamischen Verhältnissen. Diese feinfühlige Servoverstellung des Werkstücktischs wird auf dem Werkstück noch verbessert, weil das zweite Antriebsorgan stirnseitig angreift, die Schleifscheibe jedoch näher an der Schwenkachse arbeitet. Damit wird die Verstellung gemäss Hebelgesetz noch verfeinert und ist in der Längsmitte gleich Null.

Im Bereich des nicht mit einem zweiten Antriebsorgan versehenen Endes des Werkstücktischs ist vorzugsweise eine Spielausgleichsvorrichtung angeordnet. Diese eliminiert das Spiel in der Schwenkachse des Werkstücktischs und wirkt zudem stabilisierend. Bevorzugt ist die Spielausgleichsvorrichtung mit einer einstellbaren Druckfeder ausgerüstet.

Bei einer Schleiflänge von vorzugsweise wenigstens 2000 mm sind bevorzugt beidends des Werkzeugtischs zweite Antriebsorgane angeordnet, welche synchronisiert sind. In diesem Fall entfällt die oben erwähnte Spielausgleichsvorrichtung.

In bezug auf das Verfahren zum Betrieb der Rundschleifma schine wird die Aufgabe nach einer ersten Variante erfindungsgemäss dadurch gelöst, dass ein Wegmessystem die ungesteuerten Bewegungen des Werkstücktischs und/oder des Schleifsupports in Richtung der Längsachse erfasst, die Weginformationen in einem Mikrorechner-Führungssystem verarbeitet und mit einem vorprogrammierten Verhältnis an einen Transistorpuls-Umrichter zur Steuerung des/der zweiten Antriebsorgans/Antriebsorgane weitergegeben werden. Nach dieser ersten Variante ist kein gesteuertes Antriebsystem in Längsrichtung nötig, vorhandene Rundschleifmaschinen können deshalb erfindungsgemäss umgerüstet werden. Neue Rundschleifmaschinen können nach dieser Variante kostengünstiger hergestellt werden.

Die an sich bekannte Software erlaubt die Eingabe eines vorprogrammierten Verhältnisses der Schwenkbewegung zur Bewegung in Längsrichtung des rotationssymmtrischen Werkstücks. In Bruchteilen von Mikrosekunden wird die Bewegung in der erwähnten Längsrichtung analysiert und die Bewegung des zweiten Antriebsorgans nach Massgabe des programmierten Verhältnisses daran angepasst. Der Transistor-Pulsumrichter führt laufend einen Soll-Ist-Vergleich durch.

Nach einer zweiten Variante wird die Aufgabe bezüglich des Verfahrens erfindungsgemäss dadurch gelöst, dass die Bewegungen des ersten Antriebsorgans des Werkstücktischs und/oder des Schleifsupports in Richtung der Längsachse sowie des/der zweiten Antriebsorgan/Antriebsorgane zum Schwenken des Werkstücktischs über ein Bedienterminal eingegeben werden.

Zweckmässig werden die Bewegungen des/der zweiten Antriebsorgangs/Antriebsorgange unter Einschaltung eines Wegmessystems, welches die gesteuerten Bewegungen des Werkstücktischs und/oder des Schleifsupports erfasst, die Weginformationen mit einem Mikrorechner-Führungssystem verarbeitet und in einem vorprogrammierten Verhältnis an einen Transi stor-Pulsumrichter zur Steuerung des/der zweiten Antriebsorgans/Antriebsorgane weitergibt, gesteuert.

Nach der zweiten Variante des erfindungsgemässen Verfahrens ist ein an sich bekanntes Wegmessystem fakultativ. Auch ohne Wegmessystem werden die gesteuerten Bewegungen des Werkstücktischs und/oder des Schleifsupports laufend analysiert und verwertet. Die Bewegung des zweiten Antriebsorgans erfolgt vorprogrammiert und läuft synchron mit der Bewegung in Längsrichtung ab.

Die Bewegungen des zweiten Antriebsorgans, mit oder ohne Analyse der Bewegung in Längsrichtung, können frei programmiert werden. Die Veränderung ist durch eine einfache Terminaleingabe möglich, was gegenüber der mechanischen Verstellung oder gar Auswechslung von Sinuslinealen ein gewaltiger Fortschritt ist.

Je nach dem zu schleifenden rotationssymmetrischen Werkstück kann das Verhältnis der Schwenkbewegung zur Längsbewegung linear, zunehmend, abnehmend, vorerst zunehmend dann abnehmend, vorerst abnehmend dann zunehmend sein. Es ist sogar ein in bezug auf die Längsmitte des Werkstücks asymmetrischer Verlauf möglich.

Die erfindungsgemässe Vorrichtung und die Verfahren zu deren Betrieb eignen sich für alle rotationssymmetrischen, in bezug auf die Längsmitte symmetrischen und unsymmetrischen Werkstücke, insbesondere zum Ballig- oder Hohlschleifen von Walzen. Selbstverständlich können Walzen auch exakt zylindrisch und kegelförmige Werkstükke exakt kegelförmig, aber auch konkav oder konvex abweichend, geschliffen werden. Rotationssymmetrische Werkstücke mit kalottenförmiger Stirnseite sind exakt auf das Endmass schleifbar.

Die Erfindung wird anhand der in der Zeichnung dargestellten Ausführungsbeispiele, welche auch Gegenstand von abhän gigen Patentansprüchen sind, näher erläutert. Es zeigen schematisch:
- Fig. 1 eine Ansicht einer Walzenschleifmaschine,
- Fig. 2 einen Schnitt entlang der Linie II-II von Fig. 1 durch ein zweites Antriebsorgan zum Schwenken des Werkstücktischs,
- Fig. 3 einen Längsschnitt entlang der Linie III-III durch eine Spielausgleichsvorrichtung,
- Fig. 4 das Regelungsprinzip bei ungesteuerten Bewegungen des Werkstücktischs und/oder des Schleifsupports, und
- Fig. 5 das Regelungsprinzip bei gesteuerten Bewegungen des Werkstücktischs und/oder des Schleifsupports.

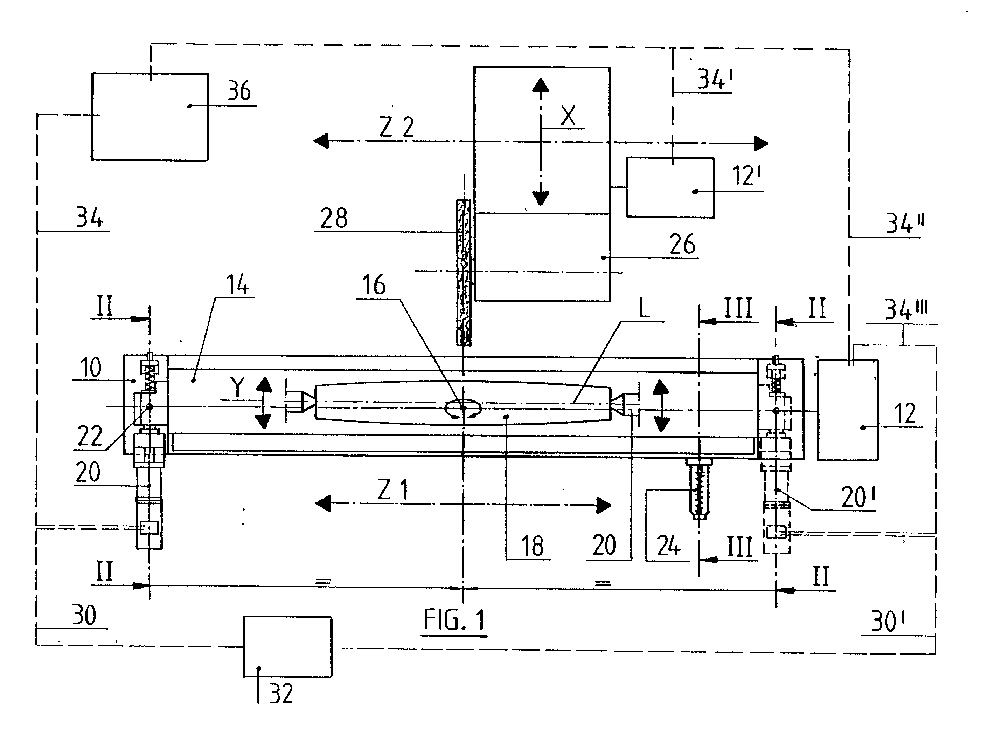

Die in Fig. 1 gezeigte Darstellung einer Walzenschleifmaschine beschränkt ist auf die für das Verständnis der Erfindung wesentlichen Teile beschränkt. Alle übrigen, dem Fachmann bekannten Teile sind weggelassen, sie können beispielsweise dem Prospekt Nr. 30406 betreffend die Walzenund Rundschreifmaschine 2U-E der Firma Johannson Grinding Machines AB, S-69105 Karlskoga, entnommen werden.

Ein Untertisch 10 ist mittels eines ersten Antriebsorgans 12 in Richtung Z verschiebbar. Diese im vorliegenden Fall durch einen Servomotor bewirkte Längsverschiebung ist durch den Pfeil Z1 dargestellt. Schwenkbar im fahrenden Untertisch 10 gelagert ist ein Werkstücktisch 14. Dieser kann in Richtung des Pfeils Y um die Achse 16 geschwenkt werden, welche längsmittig im verschiebbaren Untertisch 10 als Schwenkzapfen ausgebildet ist. Die in Längsrichtung Z verschiebbaren Maschinenelemente werden auch Längsschlitten genannt.

Das Werkstück 18, eine ballig ausgebildete Walze, ist mittels zweier Spitzen 20 axialsymmetrisch am Werkstücktisch 14 gehalten. Nach einer nicht dargestellten Variante können anstelle von Spitzen 20 Lünetten eingesetzt werden.

Ein zweites Antriebsorgan 20 greift über einen Bolzen 22 gelenkig am Werkzeugtisch 14 an. Das einen Servomotor umfassende zweite Antriebsorgan 20 bewirkt beim Verstellen eine Schwenkbewegung in Richtung des Pfeils Y.

Am nicht mit einem zweiten Antriebsorgan 20 versehenen Ende des Werkstücktischs 14 bzw. fahrenden Untertischs 10 ist eine Spielausgleichsvorrichtung 24 angeordnet.

Das zweite Antriebsorgan 20 ist werkstückspindelstockseitig angeordnet, die Spielausgleichsvorrichtung 24 reitstockseitig.

Gestrichelt angedeutet ist ein zusätzliches zweites Antriebsorgan 20', welches bei Schleiflängen über 2000 mm zur Verwendung kommen kann.

Ein Schleifsupport 26, von einem ersten Antriebsorgan 12' in Längsrichtung Z verschiebbar, ist auf einer nicht dargestellten, stets zum Werkstücktisch 14 parallel verlaufenden Schiene geführt. Die Verschiebung in Längsrichtung ist mit einem Pfeil Z2 charakterisiert. Weiter kann der Schleifsupport 26 mit der Schleifscheibe 28 in bezug auf die Längsrichtung L des Werkstücks 18 in axialer Richtung X angestellt bzw. abgehoben werden.

Arbeitet das erste Antriebsorgan 12 für den fahrenden Untertisch 10 und/oder das erste Antriebsorgan 12' für den Schleifsupport ungesteuert, so ist das zweite Antriebsorgan 20, wenn vorhanden auch das zweite Antriebsorgan 20', über gestrichelt angedeutete Kabel 30, 30' mit einem Regelsystem 32 verbunden, das mit einem nicht dargestellten Weggeber ausgerüstet ist. Bei einem gesteuerten ersten Antriebsorgan 12 für den Werkstücktisch 14 und/oder einem gesteuerten ersten Antriebsorgan 12' für den Schleifsupport 26 sind die ersten Antriebsorgane 12, 12' und die zweiten Antriebsorgane 20, 20' über ebenfalls gestrichelt angedeutete Kabel 34, 34', 34" und 34"' mit einem Regelsystem 36 verbunden.

Das in Fig. 2 dargestellte zweite Antriebsorgan 20 ist als Servoverstellung ausgebildet. Ein Servomotor 40 treibt, über ein spielarmes Reduktionsgetriebe 42, welches eine Untersetzung von 1 : 160 aufweist, eine Satellitenrollspindel 43 mit einer Steigung von 1 mm an. Die Lagerung der Satellitenrollspindel 43, Schrägkugellager 44, ist über das Gehäuse 38, fest mit dem verschiebbaren Untertisch 10 verbunden. Eine Spindelmutter 46 ist in einem drehbaren Joch 48 gehaltert und über ein Support 50 mit den schwenkbaren Werkstücktisch 14 verbunden.

Eine Druckfeder 52, einstellbar mit einer Schraube 54 und eingespannt zwischen einem Halter 56 und einer Druckplatte 58, eliminiert jegliches Spiel im Antriebssystem des schwenkbaren Werkstücktischs 14, Richtungswechsel bei Erreichen eines Kulminationspunktes auf dem Werkstück erfolgen deshalb praktisch verzögerungs- und spielfrei.

Ein Balg 60 und eine Dichtung 62 kapseln die Satellitenrollspindel 43 und die Schrägkugellager 44 einwandfrei ab, sodass bei Schleifmaschinen immer anfallender Schleifstaub nicht in die Antriebsorgane eindringen kann.

Die in Fig. 2 dargestellte Servoverstellung ist sehr feinfühlig, ein Schritt des Servomotors entspricht 0,01 um. Damit können auch kleinste Zylindrizitätskorrekturen problemlos durchgeführt werden.

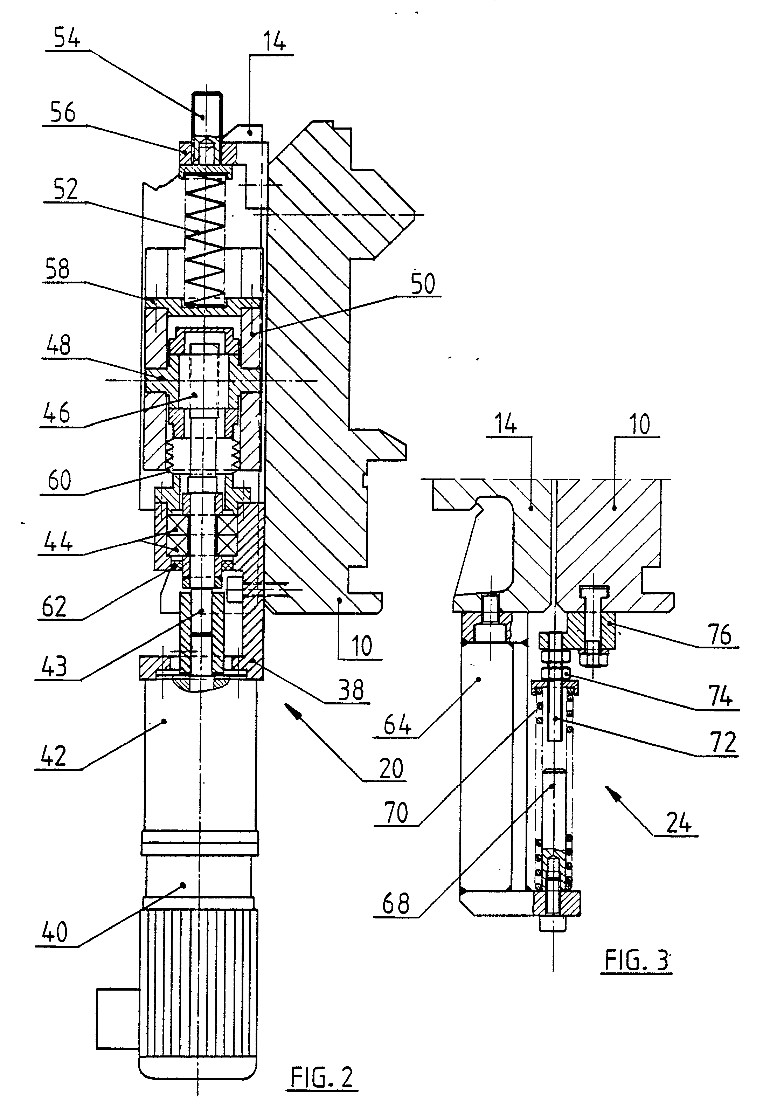

Das Gehäuse 64 der in Fig. 3 dargestellten Spielausgleichsvorrichtung 24 ist am Werkstücktisch 14 ausgeflanscht. Eine von einer mit dem Gehäuse 64 verschraubten Bolzen 68 geführte Druckfeder 70 ist mittels einer auf einem Gewindestab 72 drehbaren Schraubenmutter 74 einstellbar. Der Gewindestab 72 ist über ein Zwischenstück 76 mit dem fahrbaren Untertisch 10 verbunden. Die Druckfeder 70 hebt jegliches Spiel der Achse 16 auf.

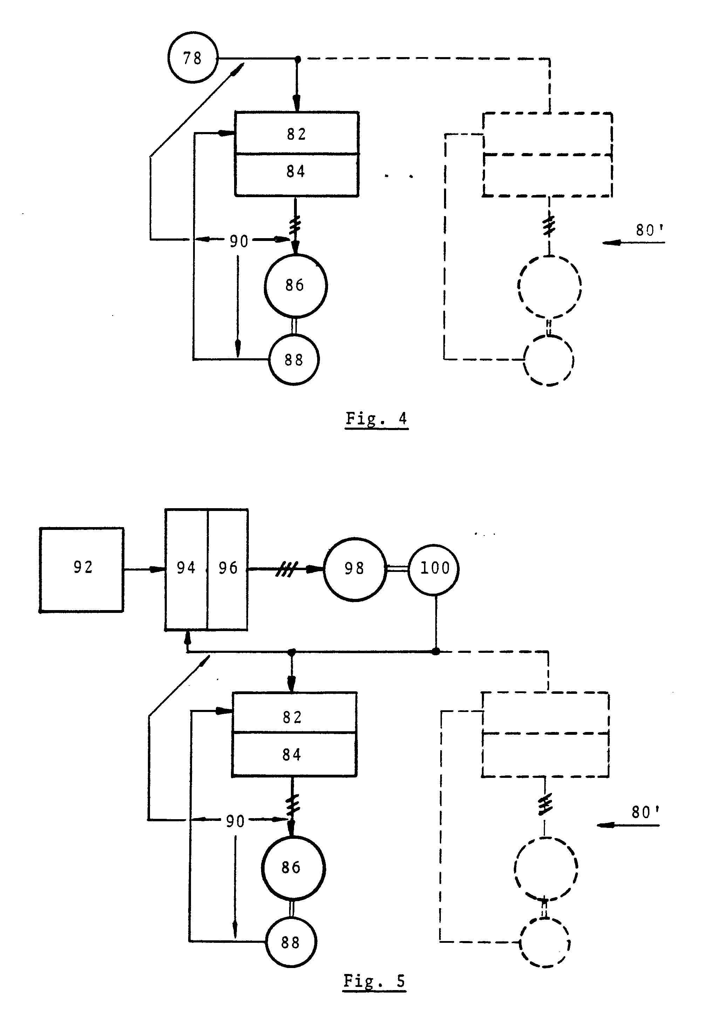

Das in Fig. 4 dargestellte Regelsystem (32 in Fig. 1) umfasst einen Weggeber 78 für die Z-Achse und ein Mikrorechner-Führungssystem 80. Dieses MRFS 80 umfasst eine Lageregelung 82 für die Schwenkbewegung, einen Transistor-Pulsumrichter 84, einen Verstellmotor 86 für die Schwenkbewegung, beispielsweise einen Servomotor 40 (gemäss Fig. 2), einen Positionsgeber 88 für die Schwenkbewegung und die notwendige Verkabelung 90.

Da das Regelsystem gemäss Fig. 4 für nicht gesteuerte Längsbewegungen des Untertischs 10 und/oder des Schleifsupports 26 in Z-Richtung verwendet wird, ist der Längsschlitten nur mit einem Wegmesssystem ausgerüstet. Die Weginformation des Wegmesssystems 78 wird vom Mikrorechner-Führungssystem 82 verarbeitet und mit dem, im MRFS programmierten Verhältnis an den Transistor-Pulsumrichter 84 zur Steuerung des Verstellmotors 86 weitergegeben. Durch die Rückmeldung des Weggebers 78 werden Soll- und Istwert dauernd verglichen, sodass ein absoluter Synchronlauf gewährleistet ist.

Mit gestrichelten Linien ist das Mikrorechner-Führungssystem 80′ eines allfälligen weiteren zweiten Antriebsorgans 20′ (Fig. 1) angedeutet, welches völlig identisch ist und synchron läuft.

Das in Fig. 5 dargestellte Regelsystem (36 in Fig. 1) umfasst ein Mikrorechner-Führungssystem 94 für die Z-Achse und ein Mikrorechner-Führungssystem 82 für die Schwenkbewegung in Richtung Y.

Ein Bedienterminal 92 besorgt über das Mikrorechner-Führungssystem 94 und einen Transistor-Pulsumrichter 96 die Lage- und Geschwindigkeitsregelung eines Servomotors 98 für die Verstellung des Untertischs 10 bzw. des Schleifsupports 26 in Längsrichtung L (Fig. 1). Die Information des Weggebers 100 wird sowohl in das Mikrorechner-Führungssystem 94 zurückgemeldet, als auch dem Mikrorechner-Führungssystem 82 für die Schwenkbewegung in Richtung Y zugeführt und wie in Fig. 4 beschrieben weiter verarbeitet.

## Ansprüche

1. Rundschleifmaschine, insbesondere Walzenschleifmaschine, mit einem längsmittig schwenkbaren Werkstücktisch (14) und wenigstens einem ersten Antriebsorgan (12,12′) zur während des Schleifens kontinuierlichen relativen Verschiebung eines rotationssymmetrischen Werkstücks (18) zu einer auf einem Schleifsupport (26) montierten Schleifscheibe (28) in Längsrichtung (Z), gekennzeichnet, durch
ein einends gelenkig am Werkstücktisch (14) angreifendes, vom ersten Antriebsorgan (12,12′) unabhängiges zweites Antriebsorgan (20) mit Positionsgeber zur Erzeugung von programmiert gesteuerten, während des Schleifens kontinuierlichen Schwenkbewegungen (Y).

2. Rundschleifmaschine nach Anspruch 1, dadurch gekennzeichnet, dass der Werkstücktisch (14) und/oder der Schleifsupport (26) in Längsrichtung (Z) verschiebbar sind.

3. Rundschleifmaschine nach Anspruch 1 oder 2, dadurch gekennzeichnet, dass das zweite Antriebsorgan (20) ein CNC gesteuerter Servomotor (40) ist, vorzugsweise ein elektrischer Asynchron-, ein elektrischer Schrittmotor ein hydraulisch oder pneumatisch gesteuerter Motor, wobei die Untersetzung Servomotor-Werkstücktischschwenkweg gross ist.

4. Rundschleifmaschine nach einem der Ansprüche 1 - 3, dadurch gekennzeichnet, dass das zweite Antriebsorgan (20), vorzugsweise ein Servomotor (40) über ein spielarmes Reduktionsgetriebe (42) mit grosser Untersetzung, eine den Nub verändernde Satellitenrollspindel (43) an treibt.

5. Rundschleifmaschine nach einem der Ansprüche 1 - 4, dadurch gekennzeichnet, dass die Satellitenrollspindel (43) und Schrägkugellager (44) zum Schutz des zweiten Antriebsorgans (20) gegen Schleifstaub mit einem Balg (60) und einer Dichtung (62) gekapselt sind.

6. Rundschleifmaschine nach einem der Ansprüche 1 - 5, dadurch gekennzeichnet, dass im Bereich des nicht mit einem zweiten Antriebsorgan (20) versehenen Endes des Werkstücktischs (14) eine Spielausgleichsvorrichtung (24) angeordnet ist, welche vorzugsweise eine einstellbare Druckfeder (70) umfasst.

7. Rundschleifmaschine nach einem der Ansprüche 1 - 5, dadurch gekennzeichnet, dass bei einer Schleiflänge von vorzugsweise mindestens 2000 mm beidends des Werkstücktischs (14) synchronisierte zweite Antriebsorgane (20, 20′) angeordnet sind.

8. Verfahren zum Betrieb der Rundschleifmaschine nach einem der Ansprüche 1 - 7, dadurch gekennzeichnet, dass ein Wegmesssystem die während des Schleifens kontinuierlichen ungesteuerten Bewegungen des Werkstücktischs (14) und/oder des Schleifsupports (26) in Richtung der Längsachse (Z) erfasst, die Weginformationen in einem Mikrorechner-Führungssystem (80) verarbeitet und mit einem vorprogrammierten Verhältnis an einen Transistor-Pulsumrichter (84) zur während des Schleifens kontinuierlichen Steuerung des/der zweiten Antriebsorgans/Antriebsorgane. (20, 20') weitergegeben werden.

9. Verfahren zum Betrieb der Rundschleifmaschine nach einem der Ansprüche 1 - 7, dadurch gekennzeichnet, dass die während des Schleifens kontinuierlichen Bewegungen der ersten Antriebsorgane (12, 12') des Werkstücktischs (14) und/oder des Schleifsupports (26) in Richtung der Längsachse (Z) sowie des/der zweiten Antriebsorgans/Antriebsorgane (20, 20') zum während des Schleifens kontinuierlichen Schwenken des Werstücktischs (14) über ein Bedienterminal (94) eingegeben werden.

10.Verfahren nach Anspruch 9, dadurch gekennzeichnet, dass die Bewegungen des/der zweiten Antriebsorgans/Antriebsorgane (20, 20') unter Einschaltung eines Wegmessystems, welches die gesteuerten Bewegungen des Werkstücktischs (14) und/oder des Schleifsupports (26) erfasst, die Weginformationen in einem Mikrorechner-Führungssystem (80) verarbeitet und mit einem vorprogrammierten Verhältnis an einen Transistor-Pulsumrichter (84) zur verfeinerten Steuerung des/der zweiten Antriebsorgans/Antriebsorgane weitergibt, gesteuert werden.

FIG. 1

EP 0 395 576 A1

EP 0 395 576 A1

FIG. 2

FIG. 3

Fig. 4

Fig. 5

Europäisches
Patentamt

# EUROPÄISCHER RECHERCHENBERICHT

Nummer der Anmeldung

EP 90 81 0300

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | FR-A-2 561 561 (TOYODA KOKI K.K.)<br>* Anspruch 1; Figuren, 4,14 *<br>--- | 1-4,8-10 | B 24 B 5/16<br>G 05 B 19/18 |
| A | DE-C- 513 019 (THE CHURCHILL MACHINE TOOL CO., LTD)<br>* Ansprüche; Fig. *<br>--- | 1,2 | |
| A | DE-A-3 405 585 (INNSE INNOCENTI SANTEUSTACCHIO S.p.A.)<br>* Zusammenfassung *<br>--- | 1,8-10 | |
| A | EP-A-0 242 593 (J.M. VOITH)<br>----- | | |

**RECHERCHIERTE SACHGEBIETE (Int. Cl.5)**

B 24 B
B 23 Q
G 05 B

Der vorliegende Recherchenbericht wurde für alle Patentansprüche erstellt

| Recherchenort | Abschlußdatum der Recherche | Prüfer |
|---|---|---|
| DEN HAAG | 30-07-1990 | ESCHBACH D.P.M. |

EPO FORM 1503 03.82 (P0403)